# EUROPÄISCHE PATENTSCHRIFT

(11) **EP 2 382 420 B1**
(45) Veröffentlichungstag und Bekanntmachung des Hinweises auf die Patenterteilung: **23.10.2019**
(21) Anmeldenummer: 10700384.0
(22) Anmeldetag: 14.01.2010
(51) Int. Cl.: F23K 3/00

(54) **VERFAHREN UND VORRICHTUNG FÜR DAS FÖRDERN VON FÖRDERFÄHIGEN MATERIALIEN**
METHOD AND DEVICE FOR TRANSPORTING FLOWABLE MATERIALS
PROCÉDÉ ET DISPOSITIF POUR TRANSPORTER DES MATÉRIAUX FLUIDES

(30) Priorität: 15.01.2009 AT 542009
(43) Veröffentlichungstag der Anmeldung: 02.11.2011
(73) Patentinhaber: Himmelfreundpointner, Kurt, 4612 Scharten (AT)
(72) Erfinder: Himmelfreundpointner, Kurt, 4612 Scharten (AT)
(86) Internationale Anmeldenummer: PCT/EP2010/000175
(87) Internationale Veröffentlichungsnummer: WO 2010/081703

(56) Entgegenhaltungen:
- EP-A2- 0 270 013
- WO-A2-2005/015083
- WO-A2-2009/146935
- BE-A- 492 390
- DE-B- 1 098 136
- DE-C- 738 492
- FR-A1- 2 497 503
- GB-A- 535 201
- GB-A- 981 996
- US-A- 2 497 628
- US-A- 4 552 490

## Beschreibung

"Materialien" im Sinne dieser Beschreibung umfassen auch Materialgemische. Diese können Feststoffteile und Flüssigkeiten umfassen, wobei Größenverteilung und Art der Feststoffe, sowie Art und Anteil der enthaltenen Flüssigkeiten in weiten Bereichen variieren können. "Förderfähig" im Sinne dieser Beschreibung bedeutet, dass das Material fließfähig und/oder rieselfähig und/oder pastös ist.

Ein vorteilhafter Anwendungsfall ist die Zuförderung von förderfähigen Materialien in Reaktionsöfen.

Ein extrem vorteilhafter Anwendungsfall ist die Zuförderung von förderfähigen Materialien an und in die gegenüber Atmosphäre unter erheblichem Überdruck stehende Druckzone von Schachtöfen für die Roheisenerzeugung. Damit können Materialgemische, welche ansonsten als Problemstoffe zu betrachten sind deren Entsorgung in Summe Kosten verursacht, nutzbringend und in der Gesamtbetrachtung mit einer Verringerung von Umweltbelastung verwendet und damit auch entsorgt werden. Typische dafür in Frage kommende Materialgemische enthalten Kohlenstoff bzw. Kohlenstoffverbindungen wie Öle, Fette, Lacke, Teer, Klebstoffe, sowie eisenhältige Späne, Stäube, Zunder, Schlacken wie sie bei der Stahlgewinnung und Stahlverarbeitung anfallen.

Gemäß der DE 37 18 568 C1 wird fließfähiges Material, welches aus Kohlegranulat und Wasser besteht durch eine Dickstoffpumpe einer Wirbelschichtfeuerung zugeführt. Damit das Material ausreichend gut gepumpt werden kann ("ausreichende hydraulisch Förderbarkeit" hat) wird dem Granulat in mehreren Mischern, welche auch eine Verkleinerung der Korngröße des Granulates bewirken, Wasser zugefügt. Seine Fließfähigkeit wird dabei kontinuierlich gemessen. Sobald das Material ausreichend fließfähig ist wird es in die Feuerung gepumpt. Für Materialgemische wie im vorigen Absatz beschrieben ist das Verfahren zu wenig robust; die Zugabe von Wasser bedeutet für den nachträglichen Verbrennungsvorgang jedenfalls bezüglich der Energiebilanz einen erheblichen Nachteil.

Die WO 2007/035974 A1 beschreibt die druckbeaufschlagte Zuführung eines fließfähigen Gutes, welches feste und flüssige Anteile enthalten kann zu Verarbeitungsanlagen insbesondere Verbrennungsöfen. Das Verarbeitungsgut wird erst gemischt, dann ohne Druckbeaufschlagung möglichst nahe an den Punkt der Einbringung an der Verarbeitungsanlage gefördert und dann durch eine Pumpe unter Druckbeaufschlagung in die Verarbeitungsanlage eingebracht. Das Fördern ohne Druckbeaufschlagung, typischerweise mit achslosen Förderschnecken, ist im Allgemeinen recht robust gegenüber Schwankungen der Eigenschaften des zu fördernden Materials. Da zudem nur über einen sehr kurzen Weg letztendlich druckbeaufschlagt gefördert wird, können mit der Lehre aus der WO 2007/035974 A1 auch die eingangs erwähnten fördertechnisch problematischen Materialgemische, welche Eisen und Kohlenstoff enthalten, in die Druckzone von Schachtöfen für die Roheisenerzeugung zugeführt werden. Der wesentlichste verbleibende Nachteil ist unangenehm hoher Verschleiß durch Abrieb von jenen Anlagenteilen der drucklos betriebenen Förderstrecke, welche mit dem zu fördernden Material in Kontakt sind. Die der Erfindung zu Grunde liegende Aufgabe besteht darin, ein Verfahren und eine Vorrichtung für das Fördern von förderfähigen Materialien, welche aus Flüssigkeiten und Feststoffen bzw. Partikel gemischt sein können, zu schaffen. Das Fördern soll robust gegenüber Variationen von Zusammensetzung, Partikelgrößenverteilung und weiteren Materialeigenschaften wie z.B. Viskosität, Thixotropie etc. des geförderten Materials funktionieren und auch dann, wenn die zu fördernden Materialien abrasive Partikel enthalten, sollen die mit diesem in Berührung kommenden Anlagenteile möglichst wenig verschleißen. Dokumente US 4552490 A, GB 535201 A, US 2497628 A, DE 738492 C und FR 2497503 A1 offenbaren Verfahren und Vorrichtungen zum Fördern von förderfähigen Materialien gemäß dem Stand der Technik.

Zum Lösen der Aufgabe wird vorgeschlagen, das zu fördernde Material innerhalb eines Hohlraumes, welcher für das Material eine Zufuhröffnung und Auslassöffnung aufweist, sowohl mittels drucklos arbeitendem, mechanischem Förderer, als auch mittels Druckpumpe zu bewegen. Die Erfindung ist ein Verfahren nach Anspruch und eine Vorrichtung nach Anspruch 6.

Drucklos arbeitende mechanische Förderer im Sinne dieser Erfindung sind solche, bei denen es für die Förderfunktion nicht erforderlich ist, dass sich ein Druck in dem zu fördernden Material entlang der Förderstrecke fortpflanzt, oder dass ein gasförmiges oder flüssiges Fördermedium das zu fördernde Material bewegt, sondern in dem das zu fördernde Material im wesentlichen durch unmittelbaren Kontakt mit einer bewegten Fläche des Förderers bewegt wird.

Die Erfindung sei des Weiteren beispielhaft an dem einfachen und vorteilhaften Spezialfall erläutert, dass besagter Hohlraum ein Rohr ist und der drucklos arbeitende mechanische Förderer eine Förderschnecke.

Auf den ersten Blick erscheint der Aufwand für das Fördern von Material entsprechend der Erfindung als hoch. Tatsächlich ergibt sich aber beim Fördern von abrasiven Materialien über die Betriebsdauer einer dementsprechend arbeitenden Förderanlage gerechnet eine erhebliche Kosteneinsparung gegenüber einer Arbeitsweise bei der entweder nur eine Pumpe oder nur eine Förderschnecke verwendet wird. In der Kombination können nämlich eine weniger leistungsfähige Pumpe und eine weniger leistungsfähige Förderschnecke verwendet werden und vor allem kann die Kombination mit sehr geringem Verschleiß und mit recht geringem Energieaufwand betrieben werden was bedeutet, dass die betriebsstundenabhängigen Kosten sehr gering sind.

Die Erfindung wird an Hand einer Zeichnung näher erläutert:

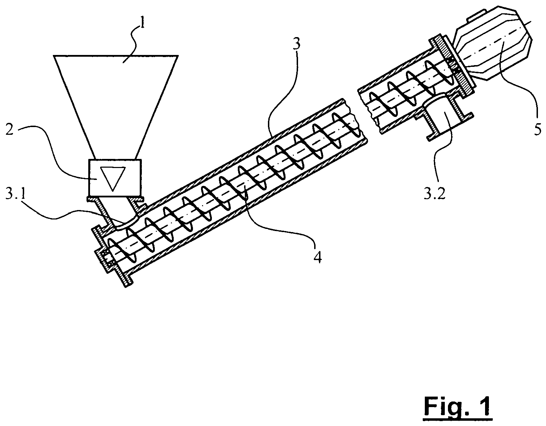

- Fig. 1:: zeigt in Teilschnittansicht eine Prinzipskizze zu einer beispielhaften Ausführungsform einer erfindungsgemäß arbeitenden Förderstrecke.

Über den Einfülltrichter 1 kommt das zu fördernde Material in eine Pumpe 1. Für die Pumpe 1 kommen die als "Dickstoffpumpe" auf dem Markt angebotenen Pumpen in Betracht. Sehr gute Erfahrungen wurden bei der Verwendung von einer Exzenterschneckenpumpe als Pumpe 1 gemacht.

Die Pumpe 1 drückt das zu fördernde Material durch eine im Nahbereich eines Endes des Rohres 3 angeordnete Zuführöffnung 3.1 in das Rohr 3, welches die Förderstrecke darstellt. Im Rohr 3 wird das Material zum gegenüberliegenden Ende durch den von der Pumpe 1 aufgebauten Förderdruck und durch die im Rohr 3 verlaufende, durch einen Antrieb 5 angetriebene achsgeführte Förderschnecke 4 bewegt. An dem der Einlassöffnung gegenüber liegenden Ende des Rohres 3 ist dessen Auslassöffnung 3.2 angeordnet, durch welche das Material wieder aus dem Rohr 3 hinaus gedrückt wird bzw. hinaus fällt.

Würde man keine Förderschnecke 4 anwenden, sondern nur eine Pumpe 2, so müsste diese mit wesentlich größerem Druck fördern um das Material durch das ansteigende Rohr 3 zu drücken als bei der dargestellten Anordnung erforderlich ist. Damit müsste eine sehr viel stärkere und teurere Pumpe eingesetzt werden, als dies bei der erfindungsgemäßen Vorgangsweise der Fall ist. Es müssten auch weitere Anlagenteile für wesentlich höheren Druck ausgelegt werden. Generell würde man nicht so große Höhen und so weite horizontale Distanzen mit einem einzigen Förderabschnitt überwinden können und man hätte stärkere Einschränkungen bezüglich den zulässigen Eigenschaften des zu fördernden Materials.

Würde man nur eine Förderschnecke 4 und keine Pumpe 2 verwenden, so müsste die Förderschnecke 4 zumindest am unteren Querschnittsflächenbereich des Rohres am Rohr anliegend angeordnet sein und sie müsste sehr rasch drehen um auch einigermaßen flüssiges Material, bzw. einen zum Heruntersinken neigenden flüssigen Anteil des Materials zu heben. In Verbindung mit harten und abrasiven Teilchen in dem zu fördernden Material käme es durch Verklemmen von Teilchen des Materials zwischen Förderschnecke und Rohrwand und durch die hohe Relativgeschwindigkeit zwischen zu förderndem Material und Anlagenteilen sowie zwischen Anlagenteilen untereinander zu erheblicher Abtragung von der Rohrwand und von der Förderschnecke.

Die Kombination aus "Pumpen des zu bewegenden Materials" und "Zusätzliches Bewegen dieses Materials in der Pumpstrecke durch einen drucklos arbeitenden mechanischen Förderer" ist gegenüber bekannten Fördermethoden bzw. bekannten Kombinationen von Fördermethoden sehr vorteilhaft, da sie für eine viel breitere Palette von zu bewegenden Materialien anwendbar ist und da mit dem zu fördernden Material nicht zwangsläufig ein zusätzliches Förderfluid (Gas oder Flüssigkeit) mitbewegt werden muss.

Erfindungsgemäß werden Förderschnecke und Pumpe so gesteuert, dass dann, wenn an einem der beiden Teile Pumpe oder Förderschnecke ein zu hoher Widerstand bemerkt wird, der jeweils andere Teil mit höherer Antriebsleistung beaufschlagt wird. Die diesbezüglich optimalen Einstellungen hängen von den Anlagendimensionen und von den Eigenschaften des zu fördernden Materials ab und sind im Wesentlichen empirisch zu ermitteln.

Wenn bei gefülltem Rohr die Förderstrecke aus irgendwelchen Gründen abgestellt werden muss, so kann die Förderschnecke 4 dennoch von Zeit zu Zeit oder durchgehend etwas langsam bewegt werden um Entmischung und Zusammenpacken, also gefährliches Anwachsen der Viskosität des zu fördernden Materials, zu vermeiden.

Wegen dieser Rührwirkung und auch um Abrasion im Spalt zwischen Rohrwand und Förderschnecke zu verhindern ist es vorteilhaft, den radialen Mindestabstand zwischen achsgeführter Förderschnecke 4 und Innenmantelfläche des Rohres größer zu wählen als die größten in dem zu fördernden Material befindlichen harten Teilchen sind.

Auf Grund von deren weiten und weichen elastischen Verformbarkeit kann bei Anwendung von achslosen Förderschnecken ein kleinerer Spalt zwischen Rohrwand und Förderschnecke vorgesehen werden.

Es ist vorteilhaft den Antrieb 5 für die Förderschnecke 4 an jenem Ende des Rohres 3 anzuordnen, an welcher sich die Auslassöffnung 3.2 für das zu fördernde Material befindet. Im Bereich dieses Endes hat das zu fördernde Material einen deutlich geringeren hydrostatischen Druck als am pumpennahen Ende des Rohres. Damit wird es einfacher, das Lager, an dem die Welle, welche Förderschnecke 4 und Antrieb 5 verbindet, durch die Stirnfläche des Rohres 5 verläuft, ausreichend druckfest auszuführen um störenden Materialfluss in und durch das Lager zu vermeiden. Falls dennoch mit hohen Drücken im Bereich des Lagers zu rechnen ist, sollte das Lager von der Außenseite her mit einer Druckschmierung beaufschlagt werden.

Wie schon eingangs erwähnt ist die erfindungsgemäße Fördermethode vorteilhaft dafür anwendbar, förderfähiges Material in die Druckzone von Schachtöfen für die Roheisenerzeugung einzubringen. Die diesbezüglichen Einbringstellen in den Schachtofen sind im Normalfall in fünf bis fünfzehn Metern Höhe über dem Ort angeordnet an den das Material mit einem Fahrzeug angeliefert werden kann. Die Abstände in horizontaler Richtung liegen typischerweise in der Größenordnung von 60 bis 150 Metern. Für die Überwindung des größten Teils dieser Abstände eignet sich die beschriebene erfindungsgemäße Fördermethode hervorragend. Nur im allerletzten Teil des gesamten Förderweges, nämlich direkt in die heiße Druckzone des Schachtofens hinein kann es vorteilhafter sein, mit kleinerer Förderquerschnittsfläche und ausschließlich druckbeaufschlagt oder kombiniert druckbeaufschlagt und fördermittelbeaufschlagt zu fördern.

Ein einzelner Förderabschnitt, dessen wesentlichste Teile eine Pumpe, ein Hohlraum und ein darin drucklos arbeitenden mechanischen Förderer sind, ist typischerweise mehrere Meter, beispielsweise 10 Meter lang. Es können problemlos beliebig viele einzelne derartige Förderabschnitte aneinander gereiht werden, sodass damit auch für schwierig zu fördernde Materialien beliebig lange Förderstrecken gebildet werden können.

Bevorzugt an längeren abfallenden oder horizontal verlaufenden, nicht oder nur wenig gekrümmten Teilabschnitten von längeren Förderstrecken ist es möglich und vorteilhaft, auch fördermittelbeaufschlagt oder fördermittelunterstützt zu fördern. Das heißt, dass das zu fördernde Material in einem Rohr zumindest unterstützt durch die Wirkung eines im Rohr strömenden Fördermittels, welches ein gut strömungsfähiges Medium wie typischerweise Druckluft ist, bewegt wird. Das Fördermittel wird dazu am Beginn eines derartigen Förderabschnittes in die Förderstrecke hinein gepumpt und kann am Ende derartiger Förderabschnitte an einer Abscheidestellen, wie beispielsweise einem Zyklon erforderlichenfalls auch wieder ausgelassen werden. Das Fördern mittels Fördermittel ist im Allgemeinen nicht so robust gegen Verstopfung wie die beschriebene Methode bei der das Material selbst gepumpt und zusätzlich drucklos bewegt wird. Manche Abschnitte, an denen die Gefahr von Verstopfung von vornherein gering ist, können damit aber bei relativ geringem apparativem Aufwand mit relativ hoher Geschwindigkeit durchfahren werden. Bei zahlreichen Anwendungen der Erfindung ist es empfehlenswert, die Begrenzungswände des Hohlraums 3 in sich hohl auszuführen. Damit kann in den Begrenzungswänden des Hohlraums 3 ein Wärmeträgerfluid transportiert werden, durch welches der Hohlraum 3 beheizt oder gekühlt werden kann. Beheizen kann typischerweise erforderlich sein um das zu fördernde Material besser fließfähig zu machen. Kühlen kann typischerweise in wärmeren Umgebungen erforderlich sein, um einzelne Komponenten des zu fördernden Materials daran zu hindern zu verdampfen.

Ebenso sei darauf hingewiesen, dass der Hohlraum in welchem Material erfindungsgemäß gefördert wird auch eine andere Form als die eines Rohres aufweisen kann. Neben der Ausbildung des Hohlraums als Rohr wird dabei vor allem die Ausbildung als flexibler Schlauch häufiger anzuwenden sein.

## Patentansprüche

1. Verfahren für das Fördern von förderfähigen Materialien wobei das zu fördernde Material innerhalb eines Hohlraumes (3) zwischen einer Zufuhröffnung (3.1) und einer Auslassöffnung (3.2) sowohl mittels drucklos arbeitenden mechanischen Förderers als auch durch die Wirkung einer Druckpumpe (2) bewegt wird, wobei die Druckpumpe (2) unmittelbar auf das zu fördernde Material wirkt, wobei als drucklos arbeitender mechanischer Förderer eine Förderschnecke (4) verwendet wird und **dadurch gekennzeichnet, dass** dann, wenn an einem der beiden Teile Druckpumpe (2) oder Förderschnecke (4) ein zu hoher Widerstand bemerkt wird, der jeweils andere Teil mit höherer Antriebsleistung beaufschlagt wird.

2. Verfahren nach Anspruch 1, **dadurch gekennzeichnet, dass** es dazu angewendet wird, förderfähiges Material in einen Reaktionsofen zu fördern.

3. Verfahren nach Anspruch 2, **dadurch gekennzeichnet, dass** es dazu angewendet wird, förderfähiges Material in die Druckzone eines Schachtofens für die Roheisenerzeugung zu fördern.

4. Verfahren nach Anspruch 3, **dadurch gekennzeichnet, dass** im Letzen Teil des Förderweges ausschließlich druckbeaufschlagt gefördert wird.

5. Verfahren nach einem der bisherigen Ansprüche, **dadurch gekennzeichnet, dass** in einem Teilabschnitt der Förderstrecke zumindest mittels Unterstützung durch ein Fördermittel gefördert wird.

6. Vorrichtung zum Fördern von förderfähigen Materialien mittels einer Druckpumpe (2) durch eine Zufuhröffnung in einen Hohlraum (3) hinein und durch eine Auslassöffnung aus diesem Hohlraum hinaus, wobei im Hohlraum (3) ein drucklos arbeitender mechanischem Förderer angeordnet ist, wobei die Druckpumpe (2) unmittelbar für das Fördern des zu fördernden Materials selbst vorgesehen ist, wobei der drucklos arbeitende mechanische Förderer eine Förderschnecke (4) ist, und **dadurch gekennzeichnet, dass** für den Fall, dass an einem der beiden Teile Druckpumpe (2) oder Förderschnecke (4) ein zu hoher Widerstand bemerkt wird, einstellbar ist, dass der jeweils andere Teil mit höherer Antriebsleistung beaufschlagt wird.

7. Vorrichtung nach Anspruch 6, **dadurch gekennzeichnet dass** der Hohlraum (3) ein Rohr ist, und dass sich der Antrieb (5) für die Förderschnecke (4) und die Auslassöffnung (3.2) im Bereich des gleichen Endes des Rohres befinden.

8. Vorrichtung nach Anspruch 6 oder 7, **dadurch gekennzeichnet, dass** die Förderschnecke (4) achsgeführt ist und dass der Radialabstand zwischen der Förderschnecke (4) und dem umliegenden Wänden des Hohlraumes mindestens so groß ist, wie die größten festen Teile, welche das förderfähige Material beinhalten darf.

9. Vorrichtung nach einem der Ansprüche 6 bis 8, **dadurch gekennzeichnet, dass** sie zur Druckzone eines Schachtofens für die Roheisenerzeugung führt.

10. Vorrichtung nach Anspruch 9, **dadurch gekennzeichnet, dass** zwischen der Vorrichtung nach Anspruch 8 und der Druckzone des Schachtofens für die Roheisenerzeugung eine ausschließlich druckbeaufschlagt arbeitende Förderstrecke zwischengeschaltet ist.

## Claims

1. Method for conveying conveyable materials the material to be conveyed being moved within a cavity (3) between a feed opening (3.1) and an outlet opening (3.2) both by means of a pressureless mechanical conveyor and by the action of a pressure pump (2), the pressure pump (2) acting directly on the material to be conveyed, wherein a screw conveyor (4) is used as the pressureless mechanical conveyor, **characterized in that**, if one of the two parts of the pressure pump (2) or screw conveyor (4) detects too high a resistance and the other part is subjected to higher drive power.

2. A method according to claim 1, **characterized in that** it is used for conveying conveyable material into a reaction furnace.

3. Method according to claim 2, **characterized in that** it is used for conveying conveyable material into the pressure zone of a shaft furnace for the production of pig iron.

4. Method according to claim 3, **characterized in that** in the last part of the conveying path conveying is exclusively by pressurized conveying.

5. Method according to one of the previous claims, **characterized in that**, in a partial section of the conveying section, conveying is carried out at least by means of support by a conveying means.

6. Device for conveying conveyable materials by means of a pressure pump (2) through a feed opening into a cavity (3) and through an outlet opening out of this cavity, a pressureless mechanical conveyor being arranged in the cavity (3), wherein the pressure pump (2) is provided directly for conveying the material to be conveyed itself, wherein the pressureless mechanical conveyor is a screw conveyor (4), **characterized in that** in the event that at one of the two parts of the pressure pump (2) or screw conveyor (4) too high a resistance is detected, it is possible to adjust the other part to be subjected to higher drive power.

7. Device according to claim 6, **characterized in that** the cavity (3) is a pipe, and **in that** the drive (5) for the screw conveyor (4) and the outlet opening (3.2) are located in the region of the same end of the pipe..

8. Device according to claim 6 or 7, **characterized in that** the screw conveyor (4) is axially guided and **in that** the radial distance between the screw conveyor (4) and the surrounding walls of the cavity is at least as large as the largest solid parts which the conveyable material may contain.

9. Device according to one of claims 6 to 8, **characterized in that** it leads to the pressure zone of a shaft furnace for the production of pig iron.

10. Device according to claim 9, **characterized in that** a conveying section operating exclusively under pressure is interposed between the device according to claim 8 and the pressure zone of the shaft furnace for pig iron production.

## Revendications

1. Procédé pour transporter des matériaux transportables le matériau à transporter étant déplacé à l'intérieur d'une cavité (3) entre une ouverture d'alimentation (3.1) et une ouverture de sortie (3.2) à la fois au moyen d'un transporteur mécanique sans pression et par l'action d'une pompe à pression (2), la pompe de pression (2) agissant directement sur le produit à transporter, dans laquelle un transporteur à vis (4) est utilisé comme transporteur mécanique sans pression, **caractérisé en ce que**, si l'une des deux parties de la pompe à pression (2) ou du transporteur à vis (4) détecte une résistance trop élevée et que l'autre partie est soumise à une puissance d'entraînement supérieure.

2. Procédé selon la revendication 1, **caractérisé en ce qu'**il est utilisé pour transporter un matériau transportable dans un four de réaction.

3. Procédé selon la revendication 2, **caractérisé en ce qu'**il est utilisé pour transporter un matériau transportable dans la zone de pression d'un four à cuve pour la production de fonte brute.

4. Procédé selon la revendication 3, **caractérisé en ce que** dans la dernière partie du trajet de transport, le transport est effectué exclusivement par pression.

5. Procédé selon l'une des revendications précédentes, **caractérisé en ce que**, dans une section partielle de la section de transport, le transport est effectué au moins au moyen d'un support par un moyen de transport.

6. Dispositif pour transporter des matières transportables au moyen d'une pompe à pression (2) à travers une ouverture d'alimentation dans une cavité (3) et à travers une ouverture de sortie de cette cavité, un transporteur mécanique sans pression étant disposé dans la cavité (3), dans lequel la pompe de pression (2) est prévue directement pour transporter le produit à transporter lui-même, dans laquelle le transporteur mécanique sans pression est un transporteur à vis (4), **caractérisé en ce que** en cas de détection d'une résistance trop élevée sur l'une des deux parties de la pompe à pression (2) ou du convoyeur à vis (4), il est possible de régler l'autre partie pour la soumettre à une puissance d'entraînement supérieure.

7. Dispositif selon la revendication 6, **caractérisé en ce que** la cavité (3) est un tuyau, et **en ce que** l'entraînement (5) pour le transporteur à vis (4) et l'ouverture de sortie (3.2) sont situés dans la zone du même côté du tuyau.

8. Dispositif selon la revendication 6 ou 7, **caractérisé en ce que** le transporteur à vis (4) est guidé axialement et **en ce que** la distance radiale entre le transporteur à vis (4) et les parois environnantes de la cavité est au moins aussi grande que les plus grandes parties solides que peut contenir le matériau transportable.

9. Dispositif selon l'une des revendications 6 à 8, **caractérisé en ce qu'**il conduit à la zone de pression d'un four à cuve pour la production de fonte brute.

10. Dispositif selon la revendication 9, **caractérisé en ce qu'**entre le dispositif selon la revendication 8 et la zone de pression du four à cuve est interposée une section de transport fonctionnant exclusivement par pression pour la production de fonte brute.
